# EUROPÄISCHE PATENTSCHRIFT

(11) **EP 1 920 388 B1**
(45) Veröffentlichungstag und Bekanntmachung des Hinweises auf die Patenterteilung: **03.11.2010**
(21) Anmeldenummer: 06762329.8
(22) Anmeldetag: 30.06.2006
(51) Int. Cl.: G06K 19/00

(54) **HERSTELLUNG VON ETIKETTEN MIT RFID-TRANSPONDERN**
PRODUCTION OF LABELS WITH RFID TRANSPONDERS
PRODUCTION D'ETIQUETTES A TRANSPONDEURS RFID

(30) Priorität: 31.08.2005 DE 102005041221
(43) Veröffentlichungstag der Anmeldung: 14.05.2008
(60) Teilanmeldung: 10170635.6
(73) Patentinhaber: KRONES Aktiengesellschaft, 93073 Neutraubling (DE)
(72) Erfinder: ACHHAMMER, Karl-Heinz, 93086 Wörth/Donau (DE)
(74) Vertreter: Grünecker, Kinkeldey, Stockmair & Schwanhäusser Anwaltssozietät
(86) Internationale Anmeldenummer: PCT/EP2006/006405
(87) Internationale Veröffentlichungsnummer: WO 2007/025591

(56) Entgegenhaltungen:
- EP-A- 1 453 088
- EP-A2- 0 615 285

## Beschreibung

Die vorliegende Erfindung betrifft eine Vorrichtung zum Herstellen von Etiketten für Behälter und insbesondere für Flaschen und ein Etikettherstellungsverfahren. Insbesondere betrifft die Erfindung eine Vorrichtung und ein Verfahren zum Herstellen von Etiketten, die RFID-Transponder aufweisen.

Automatische Identifikationsverfahren für Waren und Produkte werden weitverbreitet verwendet. Ein besonders kostengünstiges Verfahren basiert auf Strichcodes, die, zum Beispiel als Haftschildchen oder auf Etiketten aufgedruckt, zum automatischen Auslesen von Informationen, die Waren identifizieren und spezifizieren, dienen.

Strichcodes weisen jedoch dahingehend Probleme auf, dass sie eine nur sehr begrenzte Datenmenge darstellen können und dass sie nicht wiederbeschreibbar, also "umprogrammierbar", sind. Folglich werden in jüngerer Zeit Strichcodes und Strichcodeleser zunehmend durch RFID (Radio Frequency Identification) - Systeme ersetzt.

RFID-Systeme schließen eine Leseeinrichtung und einen RFID-Transponder (ein RFID-Tag) ein. Die Leseeinrichtung umfasst typischerweise einen Hochfrequenzsender und -empfänger und ein Kopplungselement, d.h. eine Spule oder Antenne, zur Kommunikation mit dem Transponder. Zudem versorgt die Leseeinrichtung in vielen Anwendungen den Transponder mit Energie über die Aussendung eines hochfrequenten elektromagnetischen Felds, welches in der Antennenspule des Transponders eine Spannung induziert.

Der RFID-Transponder umfasst ebenfalls ein Kopplungselement und einen elektronischen Mikrochip, der die in Frage stehenden Daten in einem Speicher enthält. Der Transponder ist normalerweise induktiv oder über Rückstreuung mit der Leseeinrichtung gekoppelt. In dem ersten Fall liest die Leseeinrichtung Daten aus dem Transponder durch Lastmodulation des von der Leseeinrichtung ausgesendeten elektromagnetischen Felds, die durch einen entsprechenden Lastwiderstand bewirkt wird, der durch die Daten des Transponders gesteuert wird, aus.

Aufgrund der Umprogrammierbarkeit, hohen Datenspeicherkapazität und sicheren Auslesbarkeit von RFID-Transpondern können diese vorteilhaft in Verbindung mit Etiketten an Behältern, wie Flaschen, verwendet werden. So offenbart die deutsche Gebrauchsmusterschrift DE 200 10 351 ein Flaschenetikett, welches einen RFID-Transponder aufweist, der insbesondere in oder zwischen zwei Lagen des Etikettpapiers eingebettet sein kann.

Vor dem Aufdruck des Flaschenetiketts muss dieses jedoch mit dem RFID-Transponder versehen werden. Dem eigentlichen Etikettiervorgang ist also die Zusammenfügung von Etikettpapier und RFID-Transponder vorzuschalten, wodurch der gesamte Etikettiervorgang komplizierter und verlangsamt wird.

Es ist daher wünschenswert, eine Vorrichtung und ein Verfahren zur Verfügung zu stellen, die eine effizientere und verlässliche Herstellung von Etiketten für Behälter, beispielsweise für Flaschen, die RFID-Transponder aufweisen, und somit auch eine vereinfachte Etikettierung ermöglichen.

Die oben genannte Aufgabe wird durch eine Vorrichtung zum Herstellen eines Etiketts gemäß Anspruch 1 sowie durch ein Etikettherstellungsverfahren gemäß Anspruch 3 gelöst.

EP 0 615 285 offenbart das Aufbringen eines IC-Transponders auf ein Trägermaterial, beispielsweise einen Blanko-Kartonbogen, in den mit einer Stanzvortichtung eine Vertiefung gestanzt wird, in der der Transponder fixiert wird. Eine Antenne wird durch das Drucken einer leitfähigen Tinte aufgebracht. Eine Schutzschicht wird dann über den Transponder und die Antenne gelegt.

EP 1 453 088 offenbart ein IC-Etikett, das einen ultradünnen feinfilm-integrierten Schaltkreis aufweist. Der integrierte Schaltkreis wird aus einem dünnen Halbleiterfilm mit einer Dicke zwischen 250 nm bis 750 nm geformt. Ein feinfilm-integrierter Schaltkreis kann beispielsweise an der Rückseite eines IC-Etikettes angebracht sein, das auf ein Produkt aufgeklebt wurde.

Gemäß Anspruch 1 wird eine Vorrichtung zum Herstellen eines Etiketts für einen Behälter, insbesondere für eine Flasche, zur Verfügung gestellt, die eine RFID-Fertigungseinrichtung umfasst, die konfiguriert ist, zumindest einen Teil eines Radio Frequency Identitfication (RFID) - Transponders bei dem Herstellen des Etiketts auszubilden.

Mit dem Ausdruck "Etikett" wird ein bedrucktes Trägermedium, wie Papier oder eine Spezialfolie (PBT), jeweils ggf. mit einer Klebelackbeschichtung, einer oberen elektrischen Isolationsschicht o.ä., bezeichnet, auf welchem erfindungsgemäß zumindest zum Teil ein RFID-Transponder ausgebildet ist.

Die RFID-Fertigungseinrichtung ist somit so ausgebildet, dass zumindest ein Teil des RFID-Transponders auf einem Trägermedium ausgebildet wird. Das Trägermedium ist auf einer Oberfläche des Behälters angebracht.

Der RFID-Transponder kann ein solcher sein, der beispielsweise in einem Niedrigfrequenzbereich (unterhalb von 135 kHz), in einem mittleren Frequenzbereich (6,7 - 27,3 MHz) oder einem Ultrahochfrequenzbereich (433 MHz - 5,9 GHz) arbeitet.

Durch die Ausbildung zumindest eines Teils eines RFID-Transponders während der Etikettherstellung wird die Herstellung eines zumindest einen RFID-Transponder umfassenden Etiketts gegenüber dem Stand der Technik vereinfacht und effizienter gestaltet.

Die RFID-Fertigungseinrichtung kann eine Druckeinrichtung zum Drucken eines Teils eines RFID-Transponders umfassen, wobei die Druckeinrichtung vorteilhafter Weise so ausgebildet sein kann, dass sie elektrisch leitfähige Tinte druckt. Somit können Leiterbahnen, Spulen und Antennen durch elektrisch leitfähige Tinte gedruckt werden.

Der Begriff Tinte wird hier sehr allgemein verstanden und ist nicht auf Tinte auf Wasser-, Ölbasis usw., die elektrisch leitfähige Partikel, wie Edelstahlspäne, Kupferpartikel o.ä. enthält, beschränkt, sondern umfasst jegliche elektrisch leitfähige Flüssigkeit, die sich zum Drucken, beispielsweise mithilfe von herkömmlichen Druckköpfen, eignet. Insbesondere sind mit dem Begriff Tinte hierin auch Polymere, die in hauchfeinen Schichten mit hoher Präzision übereinander gedruckt werden können und sich ähnlich wie Tinte verarbeiten lassen, umfasst.

Nur relativ geringe und naheliegende Modifikationen bestehender Druckeinrichtungen von Vorrichtungen zur Etikettherstellung und von Etikettierungsmaschinen sind notwendig, um die Ausbildung von Teilen eines RFID-Transponders bei der Etikettherstellung durch Drucken mithilfe elektrisch leitfähiger Tinte zu ermöglichen.

Die RFID-Fertigungseinrichtung ist so ausgebildet, dass eine Antenne als ein Teil des RFID-Transponders ausgebildet wird. Die Antenne stellt das Kopplungselement des RFID-Transponders dar, und sie ist besonders einfach bei der Etikettherstellung, insbesondere durch Drucken elektrisch leitfähiger Tinte, ausbildbar.

Gemäß einer Weiterbildung der erfindungsgemäßen Vorrichtung, kann die RFID-Fertigungseinrichtung so konfiguriert sein, dass sie zumindest einen Teil eines RFID-Mikrochips als ein Teil des RFID-Transponders ausbildet. Die Ausbildung eines Teils eines RFID-Transponders, z.B. mithilfe elektrisch leitfähiger Tinte, ist somit insbesondere nicht auf die Fertigung einer Antenne beschränkt. Analoge und digitale Schaltkreise sowie Leiterbahnen und Bauteile integrierter Schaltungen können ausgebildet und insbesondere gedruckt werden.

Weiterhin umfasst die erfindungsgemäße Vorrichtung eine Prägeeinrichtung.

Weiterhin kann die erfindungsgemäße Vorrichtung eine Tinten- und Farbsteuereinrichtung und/oder eine Trocknungseinrichtung und/oder eine Aushärtungseinrichtung und/oder eine Isoliereinrichtung und/oder eine Einrichtung zum Anordnen eines RFID-Mikrochips und/oder eine Druckeinrichtung zum Drucken farbiger Tinte umfassen.

Die Prägeeinrichtung ist konfiguriert, ein Trägermedium vor einem Bedrucken zu prägen. Tinte, die in die Prägungen gedruckt wird, kann besser fixiert werden. Eine Antenne wird in den Prägungen durch Drucken mit elektrisch leitfähiger Tinte ausgebildet und ggf. isoliert. Eine Kontrolleinrichtung kann die Ausbildung der Prägekanten, z.B. optisch, kontrollieren.

Die Trocknungseinrichtung kann eine Nahinfrarot-Trocknungseinrichtung sein und dem Trocknen der gedruckten Tinte dienen. Die Aushärtungseinrichtung kann eine Ultraviolett-Aushärtungseinrichtung sein und der Aushärtung von Tinte, aber auch der Aushärtung von einer Verbindung eines Mikrochips mit dem übrigen Etikett dienen, welche durch die Einrichtung zum Anordnen eines RFID-Mikrochips hergestellt werden kann. Diese letztere Einrichtung kann dazu dienen, einen Mikrochip dem Etikett zuzuführen, ihn in elektrischen Kontakt mit der Antenne des RFID-Transponders zu bringen und ihn, beispielsweise durch Kleben, mit dem Trägermedium zu verbinden.

Die Isoliereinrichtung dient dem elektrischen Isolieren von zumindest Teilen des RFID-Transponders. Insbesondere kann sie verwendet werden, um eine Isolierschicht über der Antenne auftragen. Die erwähnte Druckeinrichtung zum Drucken farbiger Tinte kann zu einem zusätzlichen Drucken eines Bereichs des Etiketts verwendet werden, in dem keine elektrisch leitfähige Tinte notwendig ist.

Die oben genannte Aufgabe wird auch durch das erfindungsgemäße Verfahren zum Herstellen eines Etiketts für einen Behälter nach Anspruch 3.

Das Etikett wird auf einem auf der Oberfläche des Behälters angebrachten Trägermedium ausgebildet.

Gemäß dem erfindungsgemäßen Verfahren wird zumindest ein Teil des RFID-Transponders durch Drucken ausgebildet, und das Drucken umfasst ein Drucken von elektrisch leitfähiger Tinte . Eine Antenne wird als ein Teil des RFID-Transponders ausgebildet. Vor dem Drucken kann eine elektrostatische Vorbehandlung der zu bedruckenden Oberfläche erfolgen, indem z.B. eine Luftschicht oberhalb der oberfläche, beispielsweise mithilfe einer Koronaentladungseinrichtung, ionisiert wird.

Der zumindest eine Teil des.RFID-Transponders wird auf einem Trägermedium ausgebildet ist auf. Das Trägermedium einer Oberfläche des Behälters angebracht.

Weiterhin kann zumindest ein Teil eines RFID-Mikrochips als ein Teil des RFID-Transponders ausgebildet sein. So können beispielsweise Leiterbahnen des Chips und/oder Bauteile desselben gedruckt werden.

Gemäß der Erfindung umfasst das Verfahren zum Herstellen eines Etiketts durch Drucken Prägen des Trägermediums um einen geprägten Bereich auszubilden, wobei das Drucken zumindest eines Teils des RFID-Transponders in dem geprägten Bereich erfolgt.

Zusätzlich kann ein Trocknen, insbesondere Nahinfrarot-Trocknen, und/oder Aushärten, insbesondere Ultraviolett-Aushärten, der elektrisch leitfähigen Tinte ausgeführt werden.

Das Verfahren kann zudem das Ausbilden einer Isolierschicht über zumindest einen Teil des RFID-Transponders bzw. über zumindest einen Teil der Antenne umfassen.

Außerdem kann ein RFID-Mikrochip so angeordnet werden, dass er in elektrischem Kontakt mit der Antenne steht. Ist diese zuvor vollständig isoliert worden, muss hierzu die Isolierung lokal aufgehoben werden. Ein bereits fertiger RFID-Mikrochip kann dem Etikett zugeführt werden, oder es wird ein zumindest teilweise bei der Herstellung des Etiketts erzeugter RFID-Mikrochip in elektrischem Kontakt mit der Antenne angeordnet. UV-Aushärten kann der klebenden Befestigung eines RFID-Mikrochip in elektrischem Kontakt mit der Antenne folgen.

Die vorliegende Erfindung stellt darüber hinaus ein Etikett für einen Behälter, insbesondere für eine Flasche, zur Verfügung, das zumindest einen RFID-Transponder umfasst, und welches dadurch gekennzeichnet ist, dass es durch das erfindungsgemäße Verfahren hergestellt wird. Die Antenne des zumindest einen RFID-Transponders kann hierbei Teil des bedruckten Bereichs des Etiketts sein, welches ein Trägermedium umfasst.

Im folgenden werden Ausführungsformen einer erfindungsgemäßen Vorrichtung und eines erfindungsgemäßen Verfahrens unter Bezugnahme auf die Zeichnung beschrieben. Die beschriebenen Ausführungsformen sind in jeder Hinsicht lediglich als illustrativ und nicht als einschränkend anzusehen und verschiedene Kombinationen der angeführten Merkmale sind in der Erfindung eingeschlossen.

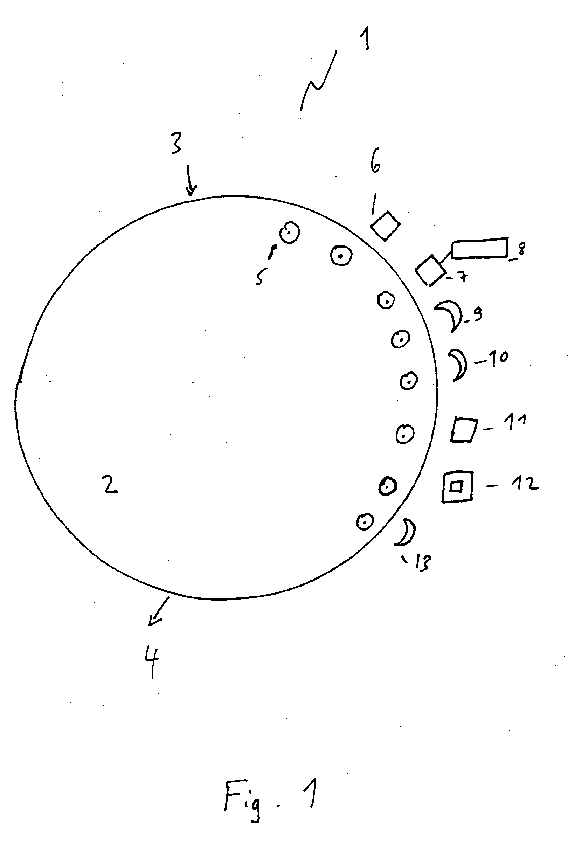

Figur 1 zeigt Bestandteile einer Ausführungsform einer Etikettiermaschine, die eine Vorrichtung zum Herstellen von Etiketten gemäß der vorliegenden Erfindung umfasst, welche eine Druckeinrichtung, die ausgebildet ist, eine Antenne für einen RFID-Transponder auf ein Trägermedium eines Etiketts zu drucken, und eine Einrichtung umfasst, die einen RFID-Mikrochip dem Etikett zuführt und diesen in elektrischem Kontakt mit der Antenne mit dem Etikett verbindet.

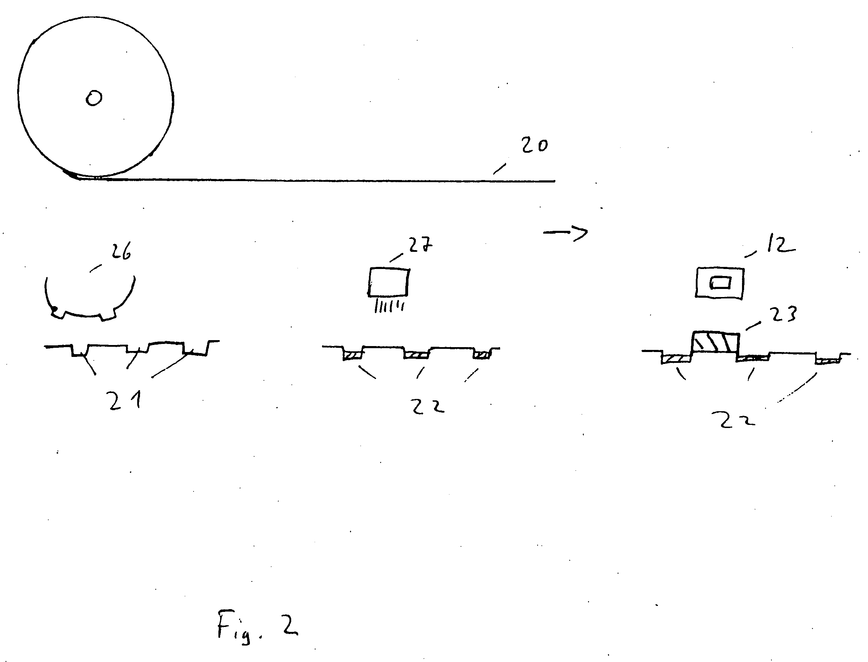

Fig. 2 illustriert beispielhafte Verarbeitungsschritte bei der Herstellung eines Etiketts mithilfe eines Trägermediums, bei der zumindest teilweise auch ein RFID-Transponder hergestellt wird.

Die in Fig. 1 teilweise gezeigte Etikettiermaschine 1 umfasst ein sich in Uhrzeigerrichtung drehendes Karussell 2 mit einem Einlass 3 und einem Auslass 4 für Flaschen 5, die zu etikettieren sind. Einer Etikettierungsstrecke werden die Flaschen, die mit einem Trägermedium, wie Papier oder eine Folie, versehen sein können, mithilfe dessen Etiketten hergestellt werden, die auf den Flaschen ausgebildet werden, zugeführt.

Im weiteren erfolgt die Beschreibung unter der Annahme, dass ein Trägermedium auf den Flaschen zur Ausbildung von Etiketten angebrach ist.

Die Etikettierstrecke umfasst eine Prägeeinrichtung 6 optional gefolgt von einer Prägekontrolleinrichtung (nicht gezeigt), die die Prägekante der von der Prägeeinrichtung 6 in dem Trägermedium eingebrachten Prägung (siehe auch Fig. 2) kontrollieren kann, sowie eine Druckeinrichtung 7, welche, gesteuert von einer Tinten- und Farbsteuereinrichtung 8, in die Prägung wie auch außerhalb der Prägung Tinte auf dem Trägermedium aufbringt. Es wird eine elektrisch leitfähige Tinte in der Prägung aufgetragen. Die Druckeinrichtung 7 umfasst einen oder mehrere feststehende Tintenstrahl-Druckköpfe mit Piezodüsen, die einen vier- bis achtfarbigen Druck mit 600 - 800 dpi erlauben.

Die Etikettierstrecke umfasst weiterhin eine Nahinfrarot-Trocknungseinrichtung 9, eine Ultraviolett-Härtungseinrichtung 10 und eine Isoliereinrichtung 11. Letztere isoliert insbesondere in der Prägung aufgebrachte elektrisch leitfähige Tinte. Zusätzlich kann das verwendete Trägermedium auf der Oberseite, d.h. der Seite, die von einem Stempel der Prägeeinrichtung 6 zuerst beim Prägen getroffen wird, eine Isolationsschicht aufweisen.

In der hier beschriebenen Ausführungsform der vorliegenden Erfindung wird eine Antenne eines RFID-Transponders mithilfe elektrisch leitfähiger Tinte in der Prägung, die die Prägeeinrichtung 6 in dem Trägermedium verursacht, mithilfe der Druckeinrichtung 7 ausgebildet.

Eine Einrichtung 12 zum Zuführen eines RFID-Mikrochips und zum mechanischen und elektrischen Verbinden desselben mit dem Etikett bzw. der Antenne dient der Fertigstellung eines RFID-Transponders in dem Etikett in Rahmen der Etikett-Herstellung und des Aufbringens des Etiketts an einer Flasche 5. Die Etikettierstrecke umfasst somit in dieser Ausführungsform eine RFID-Fertigungseinrichtung zum Erstellen eines RFID-Transponders, die die Druckeinrichtung 7 und die Einrichtung 12 umfasst.

Der Mikrochip weist einen selbstresonanten Schwingkreis, einen zusätzlichen Lastwiderstand, einen zusätzlichen Kondensator, der durch eine Leseeinrichtung induktiv aufgeladen werden kann und so der Stromversorgung des RFID-Transponders dient, und einen wiederbeschreibbaren Speicher auf. In diesem Beispiel entsteht so ein Hochfrequenz-Transponder, der ein von einem Reader ausgesendetes elektromagnetisches Feld durch Lastmodulation mithilfe eines steuerbaren Widerstands moduliert und Daten, die in dem Speicher gespeichert sind, an die Leseeinrichtung übermittelt. Der Mikrochip kann mithilfe einer klebbaren Rückseite mechanisch mit dem Etikett verbunden werden. Eine weitere UV-Härtungseinrichtung 13 dient der Fixierung der Klebeverbindung.

Erfolgt der Druck mit mehreren hintereinandergeschalteten Druckköpfen, so kann zwischen den einzelnen Druckköpfen jeweils eine Trocken- und/oder Aushärtungseinrichtung zum Fixieren der Tinte angeordnet sein.

Weiterhin kann gemäß einer alternativen Ausführungsform nicht nur die Antenne eines RFID-Transponders als Bestandteil des Etiketts gedruckt werden, sondern auch zumindest ein Teil des RFID-Mikrochips mithilfe der Druckeinrichtung 7 erstellt werden. In diesem Fall werden unterschiedliche Materialien mithilfe der Druckeinrichtung, u.a. ein geeignetes Polymer, gedruckt, um Leiterbahnen, aber auch elektronische Bauteile zu drucken. Hierbei sollte die Herstellung des Etiketts zumindest teilweise bevorzugt unter Reinraumbedingungen erfolgen.

Fig. 2 illustriert einige Schritte eines Beispiels für das erfindungsgemäße Herstellungsverfahren eines Etiketts mit einem RFID-Transponder. Ein Trägermedium 20, das von einer Rolle zugeführt wird, wird mithilfe einer Prägeeinrichtung 26 geprägt, sodass Prägungen (Vertiefungen) 21 in dem Trägermedium entstehen. Das Trägermedium kann Papier, ein SK-Label, eine beschichtete PET-Folie usw. sein. Das Trägermedium wird bearbeitet wenn es bereits auf dem Behälter angebracht, z.B. geklebt worden, ist.

Das geprägte Trägermedium 20 wird mithilfe zumindest eines Druckkopfs 27 bedruckt. Der Druckkopf druckt elektrisch leitfähige Tinte 22 in die Prägungen 21, wodurch eine Antenne eines RFID-Transponders in dem Trägermedium 20 ausgebildet wird. Anschließend kann Trocknen und/oder Aushärten der Tinte erfolgen. Die Tinte kann Eisenoxid, Aluminiumpartikel, Silberpartikel, Edelstahlfasern usw. aufweisen.

Vor dem Bedrucken, das auch Bedrucken mit nicht leitfähiger Tinte, wie IR/UV-Tinte, Tinte auf Wasser- oder Ölbasis o.ä., in und außerhalb der Prägungen 21 umfassen kann, kann das Trägermedium durch Ionisation der an der Oberfläche befindlichen Luftschicht elektrostatisch vorbehandelt werden, sodass u.a. die Tintenpartikel besser an dem Trägermedium haften.

Um den RFID-Transponder fertig zustellen, wird ein RFID-Mikrochip 23 von einer entsprechenden Einrichtung 12 zugeführt und positioniert, mit dem Trägermedium verklebt und elektrisch mit der Antenne verbunden. Diese kann zuvor elektrisch isoliert worden sein, in welchem Fall die Isolation lokal zur elektrischen Verbindung mit dem Mikrochip wieder aufgehoben wird. Die Klebeverbindung kann nachfolgen UV-ausgehärtet werden.

## Patentansprüche

1. Etikettiermaschine (1) mit:
- einem Karussell (2) zum Befördern von Behältern (5), insbesondere Flaschen, entlang einer Etikettierstrecke;
- einer Vorrichtung zum Herstellen eines Etiketts für die Behälter, die so ausgebildet ist, dass das Etikett auf einem auf der Oberfläche eines Behälters angebrachten Trägermedium in der Etikettierstrecke ausgebildet wird;
- einer RFID-Fertigungseinrichtung, die so ausgebildet ist, dass zumindest ein Teil eines Radio Frequency identification RFID-Transponders bei dem Herstellen des Etiketts in der Etikettierstrecke ausgebildet wird, wobei die RFID-Fertigungseinrichtung eine Druckeinrichtung (7) zum Drucken eines Teils des RFID-Transponders umfasst; und
- einer Prägeeinrichtung zum Erzeugen von Prägungen (21) in dem Trägermedium, wobei die Druckeinrichtung (7) ausgebildet ist, um leitfähige Tinte in die Prägungen (21) zum Ausbilden einer Antenne des RFID-Transponders zu drucken.

2. Etikettiermaschine nach Anspruch 1 weiterhin eine Tinten- und Farbsteuereinrichtung (8) und/oder eine Trocknungseinrichtung (9) und/oder eine Aushärtungseinrichtung (10) und/oder eine Isoliereinrichtung (11) und/oder eine Einrichtung zum Anordnen eines RFID-Mikrochips (12) und/oder eine Druckeinrichtung zum Drucken farbiger Tinte umfassend.

3. Verfahren zum Herstellen eines Etiketts für einen Behälter, insbesondere für eine Flasche, wobei
der zumindest eine Teil des RFID-Transponders durch Drucken ausgebildet wird,
wobei das Drucken ein Drucken von elektrisch leitfähiger Tinte (22) umfasst,
wobei eine Antenne als ein Teil des RFID-Transponders ausgebildet wird,
wobei der zumindest eine Teil des RFID-Transponders auf einem Trägermedium (20) ausgebildet wird,
wobei das Trägermedium (20) auf einer Oberfläche des Behälters angebracht ist, und mit dem weiteren Schritt Prägen eines Trägermediums (20) um einen geprägten Bereich auszubilden, und wobei
das Drucken zumindest eines Teils des RFID-Transponders in dem geprägten Bereich erfolgt.

4. Verfahren nach Anspruch 3, wobei zumindest ein Teil eines RFID-Mikrochips (23) als ein Teil des RFID-Transponders ausgebildet wird.

5. Verfahren gemäß Anspruch 3 or 4, weiterhin umfassend:
Trocknen, insbesondere Nahinfrarot-Trocknen, und/oder Aushärten, insbesondere Ultraviolett-Aushärten, der elektrisch leitfähigen Tinte.

6. Verfahren gemäß einen der Ansprüche 3 bis 5, weiterhin umfassend:
Ausbilden einer Isolierschicht über zumindest einen Teil des RFID-Transponders.

7. Verfahren gemaß Ansprüch 3, mit dem weiteren Schritt
Anordnen eines RFID-Mikrochips (23), so dass der RFID-Mikrochip in elektrischem Kontakt mit der Antenne steht.

8. Etikett für einen Behälter, hergestellt durch ein Verfahren nach einem der Ansprüche 3 - 7.

## Claims

1. Labeling machine (1) with:
- a carousel (2) for conveying containers (5), particularly bottles, along a labeling section;
- a device for manufacturing a label for the containers that is designed in such a way that the label is formed in the labeling section on a support medium that is applied to a surface of a container;
- an RFID production device that is designed in such a way that at least one part of a Radio Frequency Identification RFID transponder is formed during the manufacture of the label in the labeling section, wherein the RFID production device comprises a printing device (7) for printing a part of the RFID transponder; and
- an embossing device for making impressions (21) in the support medium, wherein the printing device (7) is designed for printing conductive ink into the impressions (21) for forming an antenna of the RFID transponder.

2. Labeling machine according to claim 1, further comprising an ink and color control device (8) and/or a drying device (9) and/or a hardening device (10) and/or an insulation device (11) and/or a device for arranging an RFID microchip (12) and/or a printing device for printing color ink.

3. Procedure for manufacturing a label for a container, particularly for a bottle,
wherein at least one part of an RFID transponder is formed by printing,
wherein the printing comprises printing of electrically conductive ink (22),
wherein an antenna is formed as a part of the RFID transponder, wherein the at least one part of the RFID transponder is formed on a support medium (20),
wherein the support medium (20) is applied to a surface of the container and with the additional step of embossing the support medium (20) to form an embossed area, and
wherein the printing of at least one part of the RFID transponder occurs in the embossed area.

4. Procedure according to claim 3, wherein at least one part of an RFID microchip (23) is formed as a part of the RFID transponder.

5. Procedure according to claim 3 or 4 comprising drying, particularly near-infrared drying, and/or hardening, particularly ultraviolet hardening of the electrically conductive ink.

6. Procedure according to one of claims 3 to 5, further comprising forming an insulation layer covering at least a part of the RFID transponder.

7. Procedure according to claim 3, with the additional step of arranging an RFID microchip (23) so that the RFID microchip is in electrical contact with the antenna.

8. Label for a container, manufactured by a method according to one of claims 3 to 7.

## Revendications

1. Machine d'étiquetage (1) avec :
- un carrousel (2) pour transporter des récipients (5), notamment des bouteilles, le long d'une chaîne d'étiquetage ;
- un dispositif pour fabriquer une étiquette pour les récipients, lequel dispositif est conçu de telle sorte que l'étiquette est réalisée sur un support appliqué sur la surface d'un récipient dans la chaîne d'étiquetage ;
- un dispositif de fabrication RFID qui est conçu de telle sorte qu'au moins une partie d'un transpondeur RFID - IDentification par Radio Fréquence - est réalisé lors de la fabrication de l'étiquette dans la chaîne d'étiquetage, le dispositif de fabrication RFID comprenant un dispositif d'impression (7) pour imprimer une partie du transpondeur RFID ; et
- un dispositif d'estampage pour produire des empreintes (21) dans le support, le dispositif d'impression (7) étant conçu pour imprimer de l'encre conductrice dans les empreintes (21) afin de réaliser une antenne du transpondeur RFID.

2. Machine d'étiquetage selon la revendication 1, comprenant également un dispositif de commande d'encres et de couleurs (8) et/ou un dispositif de séchage (9) et/ou un dispositif de durcissement (10) et/ou un dispositif d'isolation (11) et/ou un dispositif pour placer une micropuce RFID (12) et/ou un dispositif d'impression pour imprimer une encre de couleur.

3. Procédé de fabrication d'une étiquette pour un récipient, notamment pour une bouteille,
- la partie du transpondeur RFID étant réalisée par impression,
- l'impression comprenant une impression d'une encre électriquement conductrice (22),
- une antenne étant réalisée comme une partie du transpondeur RFID,
- la partie du transpondeur RFID étant réalisée sur un support (20),
- le support (20) étant appliqué sur une surface du récipient,
et avec l'autre étape suivante :
- l'estampage d'un support (20) pour concevoir une zone estampée,
- l'impression au moins d'une partie du transpondeur RFID s'effectuant dans la zone estampée.

4. Procédé selon la revendication 3, au moins une partie d'une micropuce RFID (23) étant réalisée comme une partie du transpondeur RFID.

5. Procédé selon la revendication 3 ou 4, comprenant également :
- le séchage, notamment le séchage par infrarouge proche, et/ou le durcissement, notamment le durcissement par ultraviolet, de l'encre électriquement conductrice.

6. Procédé selon l'une des revendications 3 à 5, comprenant également :
- la conception d'une couche isolante au-dessus d'au moins une partie du transpondeur RFID.

7. Procédé selon la revendication 3, comprenant l'autre étape suivante :
- l'agencement d'une micropuce (23) de telle sorte que la micropuce RFID est en contact électrique avec l'antenne.

8. Étiquette pour un récipient, fabriquée par un procédé selon l'une des revendications 3 à 7.
